# EUROPÄISCHE PATENTSCHRIFT

(11) **EP 1 123 822 B1**
(45) Veröffentlichungstag und Bekanntmachung des Hinweises auf die Patenterteilung: **13.08.2008**
(21) Anmeldenummer: 01102669.7
(22) Anmeldetag: 07.02.2001
(51) Int. Cl.: B60G 17/052

(54) **Verfahren zum Auffüllen einer Druckmittelkammer einer Niveauregelanlage aus einem Druckmittelspeicher**
Method of replenishing a pressure medium chamber of a ride level control system from a pressure medium accumulator
Procédé pour remplir une chambre à milieu sous pression d'une installation de réglage du niveau par un accumulateur à milieu sous pression

(30) Priorität: 11.02.2000 DE 10006024
(43) Veröffentlichungstag der Anmeldung: 16.08.2001
(73) Patentinhaber: Continental Aktiengesellschaft, 30165 Hannover (DE)
(72) Erfinder: Stiller, Alexander, Dr., 30863 Garbsen (DE)

(56) Entgegenhaltungen:
- EP-A- 0 695 657
- DE-A- 3 339 080
- GB-A- 2 344 323
- US-A- 4 327 936
- US-A- 4 787 644

## Beschreibung

Die Erfindung betrifft ein Verfahren zum Auffüllen einer Druckmittelkammer einer Niveauregelanlage für Fahrzeuge, durch die ein Fahrzeugaufbau gegenüber mindestens einer Fahrzeugachse abgefedert ist und die folgende Bestandteile enthält:
- einen Druckmittelspeicher
- mindestens eine Druckmittelkammer, die zeitweise mit dem Druckmittelspeicher darart in Wirkverbindung steht, dass Druckmittel aus dem Druckmittelspeicher in die Druckmittelkammer überführbar ist
- einen Kompressor, der zeitweise mit dem Druckmittelspeicher oder der Druckmittelkammer derart in Wirkverbindung steht, dass mittels des Kompressors Druckmittel in den Druckmittelspeicher oder in die Druckmittelkammer überführbar ist.

Eine Niveauregelanlage, die Druckmittelkammern und einen Druckmittelspeicher enthält, von dem aus Druckmittel in die Druckmittelkammern überführt werden kann, ist in Form einer Luftfederungsanlage beispielsweise aus der gattungsgemäßen DE 33 39 080 A1 bekannt. Wenn eine der Druckmittelkammern der Niveauregelanlage aufgefüllt werden soll, wird diese Druckmittelkammer mit dem Druckmittelspeicher verbunden und aus dem Druckmittelspeicher wird mit Hilfe eines Kompressors Druckluft aus dem Druckmittelspeicher in die Druckmittelkammer überführt. Ein Vorteil der aus der DE 33 39 080 A1 bekannten Niveauregelanlage besteht darin, dass durch den erhöhten Druck im Druckmittelspeicher die Leistungsaufnahme des Kompressors niedriger ist, als wenn diese Druckluft aus der Atmosphäre in die Druckmittelkammer überführen würde.

Es ist jedoch festzustellen, dass bei der aus der oben genannten Druckschrift bekannten Niveauregelanlage der Kompressor während des gesamten Auffüllvorganges einer Druckmittelkammer läuft, wodurch Geräusche erzeugt werden, was besonders im Stillstand des Kraftfahrzeuges und bei niedrigem Gesamtgeräuschniveau störend ist.

Der Erfindung liegt die Aufgabe zu Grunde, ein Verfahren zum Auffüllen einer Druckmittelkammer einer Niveauregelanlage für Fahrzeuge zu schaffen, bei dem die Druckmittelkammer ohne Betätigung des Kompressors möglichst lange aus einem Druckmittelspeicher aufgefüllt werden kann.

Die Aufgabe wird dadurch gelöst, dass gemäß den kennzeichnenden Merkmalen des Anspruchs 1 zur Durchführung eines Auffüllvorganges folgende Verfahrensschritte durchgeführt werden:
- vor dem Auffüllen der Druckmittelkammer mit Druckmittel wird der Druck in dem Druckmittelspeicher und der Druck in der Druckmittelkammer und die Druckdifferenz zwischen dem Druckmittelspeicher und der Druckmittelkammer bestimmt
- während des Auffüllvorgangs wird
   - Druckmittel über eine Zeitdauer, während der die Druckdifferenz zwischen dem Druckmittelspeicher und der Druckmittelkammer einen Schwellwert überschreitet, zumindest von dem Druckmittelspeicher in die Druckmittelkammer überführt,
   - Druckmittel mittels des Kompressors in die Druckmittelkammer überführt, wenn die Druckdifferenz zwischen dem Druckmittelspeicher und der Druckmittelkammer den Schwellwert erreicht und ein weiteres Auffüllen der Druckmittelkammer notwendig ist.

Für den Schwellwert wird bevorzugt ein Druck vorgegeben, der zwischen 0 bar und 1 bar liegt. Die Bestimmung des Druckes in dem Druckmittelspeicher und der Druckmittelkammer erfolgt vorzugsweise mit Hilfe eines einzigen Drucksensors der Niveauregelanlage. Wie dies im Einzelnen erfolgt, wird im Zusammenhang mit den Figuren näher erläutert.

Der mit der Erfindung erzielte Vorteil ist insbesondere darin zu sehen, dass ein Auffüllen einer Druckmittelkammer der Niveauregelanlage im Wesentlichen mit Hilfe des Druckspeichers erfolgt und der Kompressor nur dann eingesetzt wird, wenn die Druckdifferenz zwischen dem Druckmittelspeicher und der Druckmittelkammer einen Schwellwert erreicht. Durch das erfindungsgemäße Verfahren ist die Zeitspanne, während der Druckmittel von dem Druckmittelspeicher in die Druckmittelkammer überführt wird, optimiert. Durch die Erfindung ist also eine weitestgehend geräuschlose Auffüllung der Druckmittelkammern aus dem Druckmittelspeicher möglich, was insbesondere im Stillstand des Kraftfahrzeuges und bei einer niedrigen Fahrzeuggeschwindigkeit vorteilhaft ist. Der Schwellwert wird vorzugsweise so vorgegeben, dass der Druck im Druckmittelspeicher bei Erreichen des Schwellwertes geringfügig größer ist als der Druck in der Druckmittelkammer, so dass bei Erreichen des Schwellwertes noch ein ausreichend großer Luftmassenstrom des Druckmittels von dem Druckmittelspeicher in die Druckmittelkammer überführt wird. Ein weiterer Vorteil der Erfindung ist darin zu sehen, dass die Niveauregelanlage einen einfachen Aufbau aufweist und gegenüber herkömmlichen Niveauregelanlagen keine zusätzlichen Kosten entstehen.

Gemäß einer Weiterbildung nach Anspruch 2 wird die Zeitdauer, während der die Druckdifferenz zwischen dem Druckmittelspeicher und der Druckmittelkammer einen Schwellwert überschreitet, aus einer Kennlinie bestimmt, die den zeitlichen Verlauf der Druckdifferenz wiedergibt. Ein Vorteil dieser Weiterbildung ist darin zu sehen, dass während eines Auffüllvorganges keine Druckmessung notwendig ist, um die aktuelle Druckdifferenz zu bestimmen. Ein weiterer Vorteil dieser Weiterbildung ist darin zu sehen, dass eine Bestimmung der Zeitdauer aus einer Kennlinie auf einfache Art und Weise möglich ist. Alternativ ist jedoch auch eine Berechnung der Zeitdauer mit Hilfe eines mathematischen Modells möglich.

Gemäß einer Weiterbildung der Erfindung nach Anspruch 3 wird unmittelbar nach einer Änderung des Druckes in dem Druckmittelspeicher (d.h. nach jedem Auffüllvorgang der Druckmittelkammer mittels des Druckmittelspeichers und nach einem Auffüllvorgang des Druckmittelspeichers mittels des Kompressors) der Druck in dem Druckmittelspeicher gemessen. Der gemessene Druck wird in der Steuereinheit der Niveauregelanlage gespeichert und steht bei dem nächsten Auffüllvorgang zur Berechnung der anfänglichen Druckdifferenz zur Verfügung. Der Vorteil der Weiterbildung ist darin zu sehen, dass unmittelbar vor einem Auffüllvorgang ausschließlich der Druck in der Druckmittelkammer gemessen zu werden braucht und somit unmittelbar vor einem Auffüllvorgang keine zusätzliche Ventilschaltungen für die Speicherdruckmessung notwendig sind (Näheres s. Figurenbeschreibung).

Gemäß einer Weiterbildung der Erfindung nach Anspruch 4 wird der Druck in dem Druckmittelspeicher in regelmäßigen Abständen gemessen. Vorzugsweise werden zur Druckmessung Abstände gewählt, die zwischen 5 Minuten und 20 Minuten liegen. Der gemessene Druck wird in der Steuereinheit der Niveauregelanlage gespeichert, so dass unmittelbar vor einem Auffüllvorgang nur der Druck in der Druckmittelkammer gemessen zu werden braucht. Der Vorteil der Weiterbildung ist darin zu sehen, dass durch die regelmäßige Druckmessung Druckschwankungen im Druckmittelspeicher aufgrund von Temperaturschwankungen oder Leckage des Druckmittelspeichers erkannt und eliminiert werden können. Bei einem Auffüllvorgang wird also immer ein aktueller Druck des Druckmittelspeichers zu Grunde gelegt.

Gemäß einer Weiterbildung der Erfindung nach Anspruch 5 ist der Fahrzeugaufbau gegenüber mindestens einer Fahrzeugachse mit zwei Druckkammern abgefedert und wird zum gemeinsamen Auffüllen der Druckmittelkammern vor dem Auffüllvorgang der Druck in jeder Druckmittelkammer gemessen und aus diesen Messdaten wird ein Mittelwert bestimmt, wobei Druckmittel über eine Zeitdauer von dem Druckmittelspeicher in die Druckmittelkammer überführt wird, während der die Druckdifferenz zwischen dem Druckmittelspeicher und dem Mittelwert einen Schwellwert überschreitet.

Gemäß einer Weiterbildung nach Anspruch 6 ist der Fahrzeugaufbau gegenüber mindestens einer Fahrzeugachse mit zwei Druckkammern abgefedert und es wird ein Mittelwert des Druckes in den Druckmittelkammern gemessen, indem die Druckmittelkammern achsweise gleichzeitig über Ventile, von denen jeweils eines einer Druckmittelkammer zugeordnet ist, mit einem Drucksensor verbunden werden, wobei das Druckmittel über eine Zeitdauer von dem Druckmittelspeicher in die Druckmittelkammer überführt wird, während der die Druckdifferenz zwischen dem Druckmittelspeicher und dem Mittelwert einen Schwellwert überschreitet. Die Weiterbildung gemäß Anspruch 6 weist gegenüber der Weiterbildung gemäß Anspruch 5 den Vorteil auf, dass der Mittelwert in den beiden Druckmittelkammern direkt bestimmt wird. Ein separates Verbinden der einzelnen Druckmittelkammern mit dem Drucksensor ist nicht notwendig.

Gemäß einer Weiterbildung der Erfindung nach Anspruch 7 erfolgt die Druckbestimmung in der bzw. den Druckmittelkammern unmittelbar vor einem Auffüllvorgang. Der Vorteil dieser Weiterbildung ist darin zu sehen, dass der Auffüllvorgang unter Zugrundelegung eines exakten Druckwertes durchgeführt wird, der unmittelbar vor dem Auffüllvorgang in der bzw. den Druckmittelkammern vorgelegen hat. Somit kann eine Berechnung der anfänglichen Druckmitteldruckdifferenz und der Zeitdauer, während der diese überschritten wird, exakt erfolgen. Ein weiterer Vorteil der Weiterbildung wird verständlich, wenn man Folgendes berücksichtigt: Zur Bestimmung des Druckes bzw. des Druckmittelwertes wird eine bzw. werden die Druckkammern durch das Öffnen von ihnen zugeordneten Ventilen gleichzeitig mit einem Drucksensor verbunden. Nach Bestimmung des Druckes bzw. des Druckmittelwertes bleiben die genannten Ventile geöffnet und es wird zusätzlich ein dem Druckmittelspeicher zugeordnetes Ventil geöffnet, um diesen mit der bzw. mit den Druckkammern zu verbinden. Durch die Weiterbildung wird also der Vorteil erreicht, dass trotz der Bestimmung des Druckes bzw. des Druckmittelwertes in der bzw. den Druckkammern keine zusätzlichen Schaltvorgänge an den Ventilen (die deren Lebensdauer verkürzen) notwendig sind, wenn unmittelbar nach der Bestimmung die Druckmittelkammern zum Auffüllen mit dem Druckmittelspeicher verbunden werden (Näheres s. Figurenbeschreibung).

Gemäß einer Weiterbildung der Erfindung nach Anspruch 8 steht der Kompressor während der Zeitdauer, in der mit ihm Druckmittel in eine Druckmittelkammer geführt wird, nicht mit dem Druckmittelspeicher in Wirkverbindung. Der Vorteil dieser Weiterbildung ist darin zu sehen, dass der Kompressor während des Auffüllvorganges ausschließlich Druckmittel in die Druckmittelkammern überführt und nicht zusätzlich in den Druckmittelspeicher. Somit wird der Auffüllvorgang einer oder mehrerer Druckmittelkammern durch ein ungewolltes Auffüllen des Druckmittelspeichers nicht verzögert.

Gemäß einer Weiterbildung der Erfindung nach Anspruch 9 wird während der Zeitdauer, in der Druckmittel von dem Druckmittelspeicher in eine Druckmittelkammer überführt wird, zusätzlich Druckmittel mittels des Kompressors in die Druckmittelkammer überführt. Der Vorteile dieser Weiterbildung ist darin zu sehen, dass ein Auffüllvorgang einer oder mehrerer Druckmittelkammern besonders schnell abgeschlossen werden kann. Vorzugsweise wird von dieser Weiterbildung Gebrauch gemacht, wenn die Geschwindigkeit des Fahrzeuges einen Schwellwert überschreitet, da in diesem Falle die durch den Lauf des Kompressors erzeugten Geräusche/nicht stören.

Ein Ausführungsbeispiel und weitere Vorteile der Erfindung werden im Zusammenhang mit den nachstehenden Figuren erläutert, darin zeigt:
Figur 1 eine Niveauregelanlage in schematischer Darstellung,
Figur 2 ein Diagramm.

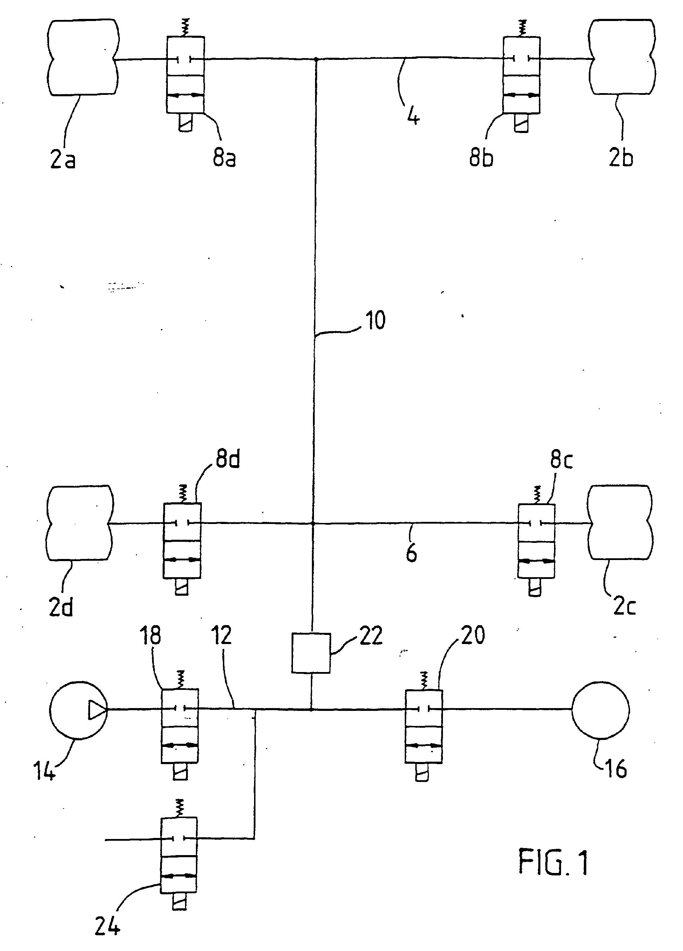

Figur 1 zeigt in stark schematisierter Darstellung eine Niveauregelanlage in Form einer Luftfederungsanlage für ein Kraftfahrzeug, wobei nur die für die nachfolgenden Erläuterungen notwendigen Bestandteile gezeigt sind. Derartige Niveauregelanlagen sind an sich bekannt, so dass sie hier nur kurz erläutert werden sollen. Die Luftfederungsanlage verfügt über Luftfedern 2a und 2b, die der Vorderachse des Kraftfahrzeuges zugeordnet sind und über Luftfedern 2c und 2d, die der Hinterachse des Kraftfahrzeuges zugeordnet sind. Mit den Luftfedern 2a - 2d ist ein (nicht gezeigter) Fahrzeugaufbau des Kraftfahrzeuges federnd gelagert. Die Luftfedern 2 a und 2b stehen über eine Querleitung 4 und die Luftfedern 2c und 2d stehen über eine Querleitung 6 miteinander in Verbindung. Jede Querleitung 4, 6 enthält jeweils zwei Quersperrventile 8a, 8b und 8c, 8d, von denen jeweils eines einer Luffeder 2a - 2d zugeordnet ist. Darüber hinaus stehen die Querleitungen 4 und 6 mit einer weiteren Leitung 10 in Verbindung, über die die Luftfedern 2a - 2d mit Druckluft (Druckmittel) befüllt bzw. über die Druckluft aus den Luftfedern 2a - 2d abgelassen wird. Die Leitung 10 endet in einer Querleitung 12, deren eines Ende über ein Ventil 18 mit einem Kompressor 14 und deren anderes Ende über ein Ventil 20 mit einem Druckmittelspeicher in Form eines Druckluftspeichers 16 verbunden ist. Darüber hinaus ist in der Leitung 10 ein Drucksensor 22 angeordnet, mit dessen Hilfe der Druck in den Luftfedern 2a - 2d und in dem Druckluftspeicher 16 messbar ist. Schließlich kann die Leitung 10 über ein Ventil 24 mit der Atmosphäre verbunden werden, so dass in an sich bekannter Art und Weise Luft aus den Luftfedern 2a-2d abgelassen werden kann.

Im Folgenden wird anhand der Luftfeder 2a erläutert, wie mit Hilfe des Drucksensors 22 der Luftdruck in den Luftfedern 2a - 2d messbar ist: Von der (in der Figur nicht gezeigten) Steuereinheit der Luftfederungsanlage wird zunächst der Steuereingang des Quersperrventils 8a bestromt, so dass dieses von seinem in der Figur 1 gezeigten Grundzustand in den Schaltzustand übergeht. Alle anderen Ventile verbleiben in dem in der Figur 1 gezeigten Grundzustand. Die Luftfeder 2a ist dann über die Querleitung 4 und die Leitung 10 mit dem Drucksensor 22 verbunden. Nach einer Zeitspanne von 0,1 - 2 Sekunden liegt an dem Drucksensor 22 der statische Luftdruck der Luftfeder 2a an, so dass dieser dort gemessen werden kann. Wenn unmittelbar nach erfolgter Druckmessung die Luftfeder 8a nicht aufgefüllt werden soll, wird der Steuereingang des Quersperrventils 8a nicht weiter bestromt, so dass es wieder in den Grundzustand übergeht. Andernfalls wird der Steuereingang des Quersperrventils 8a weiterhin bestromt, so dass es in seinem Schaltzustand verbleibt.

Im Folgenden wird anhand der Luftfedern 2a und 2b erläutert, wie der Mittelwert des Luftdruckes in zwei Luftfedern der Luftfederungsanlage bestimmt werden kann: Eine erste Möglichkeit besteht darin, dass man den Luftdruck in den Luftfedern 2a und 2b einzeln, wie oben erläutert, bestimmt und in der Steuereinrichtung der Luftfederungsanlage den Mittelwert der einzelnen Druckwerte berechnet. Alternativ ist es möglich, dass die Steuereinrichtung die Steuereingänge der Quersperrventile 8a und 8b gleichzeitig bestromt, so dass diese von dem in der Figur 1 gezeigten Grundzustand in ihren Schaltzustand übergehen. Die übrigen Ventile verbleiben in dem in der Figur 1 gezeigten Grundzustand. Die Luftfedern 2a und 2b sind dann über die Querleitung 4 und die Leitung 10 mit dem Drucksensor 22 verbunden, so dass sich dort nach einer kurzen Zeitspanne der mittlere Luftdruck in den Luftfedern 2a und 2b einstellt und mit dem Drucksensor 22 messbar ist. Wenn unmittelbar nach erfolgter Druckmessung die Luftfedern 8a und 8b nicht aufgefüllt werden sollen, werden die Steuereingänge der Quersperrventile 8a und 8b nicht mehr bestromt, so dass sie wieder in den Grundzustand übergehen. Andernfalls werden die Steuereingänge der Quersperrventile 8a und 8b weiterhin bestromt, so dass sie in ihrem Schaltzustand verbleiben.

Mit Hilfe des Drucksensors 22 kann ebenfalls der statische Luftdruck in dem Druckluftspeicher 16 gemessen werden, indem von der Steuereinrichtung der Steuereingang des Ventils 20 bestromt wird, so dass dieses von dem in der Figur 1 gezeigten Grundzustand in den Schaltzustand übergeht. Die übrigen Ventile der Luftfederungsanlage verbleiben in dem in der Figur 1 gezeigten Grundzustand. Nach einer kurzen Zeitspanne von ca. 0,1 - 2 Sekunden stellt sich dann an dem Drucksensor 22 der statische Luftdruck in dem Druckluftspeicher 16 ein, so dass dieser mittels des Drucksensors 22 gemessen werden kann. Nach erfolgter Druckmessung wird der Steuereingang des Ventiles 20 nicht weiter bestromt, so dass es wieder in den Grundzustand übergeht.

Die von dem Drucksensor 22 gemessenen Druckwerte werden an die Steuereinrichtung der Luftfederungsanlage überführt und dort ausgewertet. Die Steuereinheit erkennt anhand der Bestromung der Ventile, wo von dem Drucksensor 22 der Druck gemessen worden ist. Wird von der Steuereinheit z.B. das Quersperrventil 8a bestromt und wird dann von dem Drucksensor 22 ein Messwert übermittelt, so weiß die Steuereinheit, dass dieser Messwert zu der Luftfeder 2a gehört.

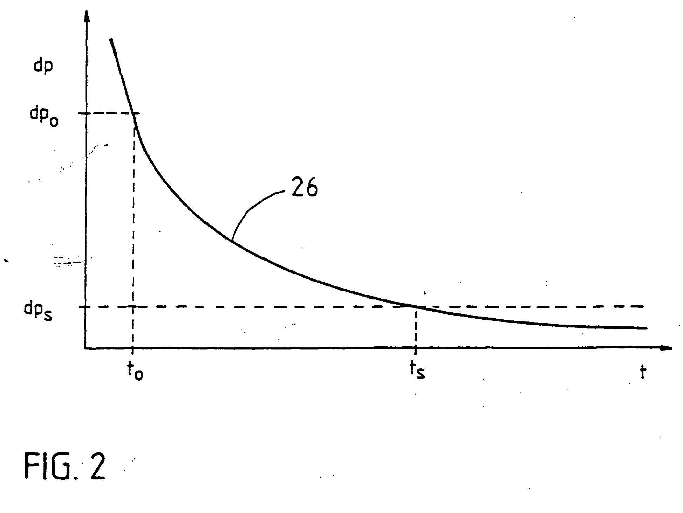

Anhand der Luftfeder 2a wird im Folgenden erläutert, wie eine Luftfeder 2a - 2d der Luftfederungsanlage mit Druckluft aufgefüllt werden kann. Unmittelbar vor dem Auffüllen der Luftfeder 2a wird, wie oben erläutert, der Luftdruck pₛ in dem Luftdruckspeicher 16 und der Luftdruck P_{L} in der Luftfeder 2a mit Hilfe des Drucksensors 22 gemessen. Danach wird in der Steuereinheit der Luftfederungsanlage die anfängliche Druckdifferenz dp₀ = pₛ - p_{L} zwischen dem Druckluftspeicher 16 und der Luftfeder 2a bestimmt. Liegt die Druckdifferenz dp₀ oberhalb eines positiven Schwellwertes, ist der Luftdruck in dem Luftdruckspeicher 16 also größer als in der Luftfeder 2a, so wird die Luftfeder 2a zunächst mit dem Druckluftspeicher 16 verbunden. Dies geschieht dadurch, dass die Steuereinheit den Steuereingang des Ventils 20 bestromt, so dass diese von dem in der Figur 1 gezeigten Grundzustand in seinen Schaltzustand übergeht. Da der Steuereingang des Quersperrventils 8a durch die Steuereinheit zur Bestimmung des Luftdruckes in der Luftfeder 2a bestromt worden ist und während der Berechnung der Druckdifferenz dpₒ weiterhin bestromt wird, befindet es sich ebenfalls in seinem Schaltzustand. Es kann dann Druckluft aus dem Druckluftspeicher 16 über die Querleitung 12, die Leitung 10 und die Querleitung 4 in die Luftfeder 2a strömen. Durch das Überströmen der Druckluft aus dem Druckluftspeicher 16 in die Luftfeder 2a gleicht sich ps an PL immer stärker an, so dass die Druckdifferenz dp sich dem Schwellwert nähert. Über die Zeitdauer, während der die Druckdifferenz oberhalb des Schwellwertes liegt, wird Druckluft aus dem Druckluftspeicher 16 in die Luftfeder 2a überführt. Wie die Zeitdauer bestimmt werden kann, wird im Zusammenhang mit der Figur 2 erläutert.

Wenn die Steuereinheit feststellt, dass die Zeitdauer abgelaufen ist (die Druckdifferenz dp also den Schwellwert erreicht), wird von der Steuereinrichtung der Steuereingang des Ventils 20 nicht mehr bestromt, so dass dieses von seinem Schaltzustand in den in der Figur 1 gezeigten Grundzustand übergeht. Ist ein weiteres Auffüllen der Luftfeder 2a notwendig (weil der Fahrzeugaufbau das gewünschte Niveau noch nicht erreicht hat), wird von der Steuereinrichtung ferner der Steuereingang des Ventils 18 bestromt, so dass der Kompressor 14 über die Querleitung 12, die Leitung 10 und die Querleitung 4 mit der Luftfeder 2a verbunden ist. Ferner wird von der Steuereinrichtung der Kompressor 14 angesteuert, so dass dieser Druckluft in die Luftfeder 2a fördert, bis der Auffüllvorgang abgeschlossen ist, das heißt, dass der Fahrzeugaufbau im Bereich der Luftfeder 2a also das gewünschte Niveau erreicht hat. Wenn dies der Fall ist, werden von der Steuereinrichtung die Steuereingänge der Ventile 8a und 18 nicht weiter bestromt, so dass diese von ihrem Schaltzustand wieder in den in der Figur 1 gezeigten Grundzustand übergehen.

Der Auffüllvorgang der Luftfeder 2a kann beschleunigt werden, indem sie während des Zeitraumes, in dem sie aus dem Druckluftspeicher 16 aufgefüllt wird, gleichzeitig mit Hilfe des Kompressors 14 aufgefüllt wird. In diesem Fall werden von der Steuereinrichtung zusätzlich zu den Steuereingängen der Ventile 8a und 20 der Steuereingang des Ventils 18 bestromt und ein Signal an den Kompressor 14 übermittelt, so dass dieser Druckluft in die Luftfeder 2a fördert.

Die vor einem Auffüllvorgang für die Bestimmung der anfänglichen Druckmitteldruckdifferenz notwendige Druckmessung des Luftdruckes in dem Druckluftspeicher 16 kann unmittelbar nach einer Änderung des dortigen Luftdruckes erfolgen. Um die Anzahl der Ventilschaltungen zu reduzieren, werden bei Erreichen des Sollniveaus unter Verwendung des Druckspeichers zuerst die Quersperrventile der Luftfedern geschlossen, während das Speicherventil 20 zur anschließenden Druckmessung noch geöffnet bleibt. Erst nach Ermittlung des Speicherdruckes wird dann das Speicherventil 20 geschlossen. Für diesen Fall ist also kein zusätzlicher Ventilschaltvorgang notwendig. In dem Druckluftspeicher 16 ändert sich der Luftdruck auf Grund eines Auffüllens einer Luftfeder mit Druckluft aus dem Druckluftspeicher 16 oder wenn mittels des Kompressors 14 Druckluft in den Druckluftspeicher 16 überführt wird. Der nach einer Druckänderung gemessene Luftdruck im Druckluftspeicher 16 wird in der Steuereinrichtung der Niveauregelanlage gespeichert. Die vor einem Auffüllvorgang zusätzlich notwendige Bestimmung des Luftdruckes in einer oder mehreren Luftfedern erfolgt hingegen vorzugsweise unmittelbar vor dem Auffüllvorgang.

Wenn anstatt einer einzelnen Luftfeder 2a - 2d zwei Luftfedern der Luftfederungsanlage, z.B. die Luftfedern 2a und 2b der Vorderachse, gleichzeitig befüllt werden sollen, wird im Wesentlichen genauso vorgegangen, wie oben erläutert. Ein Unterschied ist lediglich darin zu sehen, dass bei der Berechnung der Druckmitteldruckdifferenz anstatt des Druckwertes in einer Luftfeder der Mittelwert des Druckes in den beiden Luftfedern zu Grunde gelegt wird (d.h. dp₀ = P_{S} - P_{Mi} P_{M} = Mittelwert). Ein weiterer Unterschied ist darin zu sehen, dass über die zugehörigen Quersperrventile 8a, 8b die beiden Luftfedern 2a, 2b gleichzeitig mit dem Druckluftspeicher 16 und/oder dem Kompressor 14 verbunden sind.

Figur 2 zeigt ein Diagramm, in dem die Druckdifferenz dp über der Zeit t aufgetragen ist. Das Diagramm enthält eine Kennlinie 26, die den zeitlichen Verlauf der Druckdifferenz dp darstellt. Die Kennlinie 26 ist in der Steuereinrichtung der Luftfederungsanlage gespeichert. Mit Hilfe der Kennlinie 26 wird in der Steuereinrichtung die Zeitdauer berechnet, während der die Druckdifferenz dp zwischen dem Druckluftspeicher 16 und einer Luftfeder einen Schwellwert überschreitet. Dazu wird wird von der Steuereinrichtung zunächst die anfängliche Druckdifferenz dpₒ bestimmt, die vor dem Auffüllvorgang zwischen dem Druckluftspeicher 16 und der aufzufüllenden Luftfeder 2a - 2d vorliegt. Danach wird in der Steuereinrichtung aus der Kennlinie 26 bestimmt, welche Zeit t₀ dieser Druckdifferenz dp₀ zugeordnet ist. Die vor dem Auffüllvorgang vorliegende anfängliche Druckdifferenz dp₀ reduziert sich auf Grund des Druckausgleiches zwischen dem Druckluftbehälter 16 und der aufzufüllenden Luftfeder 2a - 2d nach der Gesetzmäßigkeit, die durch die Kennlinie 26 wieder gegeben ist. Zum Zeitpunkt tₛ ist die Druckdifferenz dp₀ auf einen Schwellwert dpₛ abgesunken. Aus dem Diagramm gemäß Figur 2 wird in der Steuereinrichtung die Zeitdauer T = tₛ - tₒ berechnet, während der die Druckmitteldruckdifferenz dp zwischen dem Drucfkluftspeicher 16 und der aufzufüllenden Luftfeder 2a - 2d den Schwellwert dpₛ überschreitet. Die so bestimmte Zeitdauer T wird in dem Verfahren zum Auffüllen der Luftfeder 2a - 2d in der im Zusammenhang mit der Figur 1 erläuterten Art und Weise genutzt.

Auf entsprechende Art und Weise kann die Zeitdauer bestimmt werden, wenn zwei Luftfedern der Luftfederungsanlage gleichzeitig aufgefüllt werden sollen. Der einzige Unterschied ist dann lediglich darin zu sehen, dass die Druckmitteldruckdifferenz zwischen dem Luftfdruck im Druckmittelspeicher 16 und dem Mittelwert in den Luftfedern gebildet wird (geändertes Kennfeld).

Zur Durchführung des erfindungsgemäßen Verfahrens wird der Druckmitteldruck in der bzw. den Druckmittelkammern, die aufgefüllt werden sollen, und in dem Druckmittelspeicher ausschließlich vor dem Auffüllvorgang gemessen. Aus dem gemessenen Druckmitteldruck wird die anfängliche Druckdifferenz dp₀ bestimmt. Während eines Auffüllvorganges wird eine Messung des Druckmitteldruckes in den genannten Bestandteilen nicht durchgeführt. Vielmehr findet eine weitere Übewachung der Druckmitteldruckdifferenz und eine Bestimmung der Zeitdauer T aus der Kennlinie 26 statt. Eine Druckmitteldruckmessung ist dazu nicht mehr notwendig.

### Bezugszeichenliste

- 2a, ..., 2d: Luftfedern
- 4, 6: Querleitung
- 8a, ..., 8d: Quersperrventil
- 10: Leitung
- 12: Querleitung
- 14: Kompressor
- 16: Druckluftspeicher
- 18, 20: Ventile
- 22: Drucksensor
- 24: Ventil
- 26: Kennlinie

## Patentansprüche

1. Verfahren zum Auffüllen einer Druckmittelkammer (2a bis 2d)einer Niveauregelanlage für Fahrzeuge, durch die ein Fahrzeugaufbau gegenüber mindestens einer Fahrzeugachse abgefedert ist und die folgende Bestandteile enthält:
- einen Druckmittelspeicher (16)
- mindestens eine Druckmittelkammer (2a bis 2d), die zeitweise mit dem Druckmittelspeicher (16) derart in Wirkverbindung steht, dass Druckmittel aus dem Druckmittelspeicher (16) in die Druckmittelkammer (2a bis 2d) überführbar ist
- einen Kompressor (14), der zeitweise mit dem Druckmittelspeicher (16) oder der Druckmittelkammer (2a bis 2d) derart in Wirkverbindung steht, dass mittels des Kompressors (14) Druckmittel in den Druckmittelspeicher (16) oder in die Druckmittelkammer (2a bis 2d) überführbar ist
**dadurch gekennzeichnet, dass** zur Durchführung eines Auffüllvorganges folgende Verfahrensschritte durchgeführt werden:
- vor dem Auffüllen der Druckmittelkammer (2a bis 2d) mit Druckmittel wird der Druck in dem Druckmittelspeicher (16) und der Druck in der Druckmittelkammer und die Druckdifferenz zwischen dem Druckmittelspeicher (16) und der Druckmittelkammer (2a bis 2d) bestimmt
- während des Auffüllvorgangs wird
- Druckmittel über eine Zeitdauer, während der die Druckdifferenz zwischen dem Druckmittelspeicher (16) und der Druckmittelkammer (2a bis 2d) einen Schwellwert überschreitet, zumindest von dem Druckmittelspeicher (16) in die Druckmittelkammer (2a bis 2d) überführt,
- Druckmittel mittels des Kompressors (14) in die Druckmittelkammer (2a bis 2d) überführt, wenn die Druckmitteldruckdifferenz zwischen dem Druckmittelspeicher (16) und der Druckmittelkammer (2a bis 2d) den Schwellwert unterschreitet und ein weiteres Auffüllen der Druckmittelkammer (2a bis 2d) notwendig ist.

2. Verfahren zum Auffüllen einer Druckmittelkammer einer Niveauregelanlage nach Anspruch 1, **dadurch gekennzeichnet, dass** die Zeitdauer, während der die Druckdifferenz zwischen dem Druckmittelspeicher (16) und der Druckmittelkammer (2a bis 2d) einen Schwellwert überschreitet, aus einer Kennlinie (26) bestimmt wird, die den zeitlichen Verlauf der Druckdifferenz wiedergibt.

3. Verfahren zum Auffüllen einer Druckmittelkammer (2a bis 2d) einer Niveauregelanlage nach einem der Ansprüche 1 bis 2, **dadurch gekennzeichnet, dass** unmittelbar nach einer Änderung des Druckes in dem Druckmittelspeicher (16) der Druck in dem Druckmittelspeicher (16) gemessen wird.

4. Verfahren zum Auffüllen einer Druckmittelkammer (2a bis 2d) einer Niveauregelanlage nach einem der Ansprüche 1 bis 3, **dadurch gekennzeichnet, dass** der Druck in dem Druckmittelspeicher (16) in regelmäßigen Abständen gemessen wird.

5. Verfahren zum Auffüllen einer Druckmittelkammer einer Niveauregelanlage nach einem der Ansprüche 1 bis 4, **dadurch gekennzeichnet, dass** der Fahrzeugaufbau gegenüber mindestens einer Fahrzeugachse mit zwei Druckkammern (2a bis 2d) abgefedert ist und dass zum gemeinsamen Auffüllen der Druckmittelkammern (2a bis 2d) vor dem Auffüllvorgang der Druck in jeder Druckmittelkammer (2a bis 2d) gemessen wird und aus diesen Meßwerten ein Mittelwert bestimmt wird, und dass Druckmittel über eine Zeitdauer von dem Druckmittelspeicher (16) in die Druckmittelkammern (2a bis 2d) überführt wird, während der die Druckdifferenz zwischen dem Druckmittelspeicher (16) und dem Mittelwert einen Schwellwert überschreitet.

6. Verfahren zum Auffüllen einer Druckmittelkammer einer Niveauregelanlage nach einem der Ansprüche 1 bis 4, **dadurch gekennzeichnet, dass** der Fahrzeugaufbau gegenüber mindestens einer Fahrzeugachse mit zwei Druckkammern (2a bis 2d) abgefedert ist und dass ein Mittelwert des Druckes in den Druckmittelkammern (2a bis 2d) gemessen wird, indem die Druckmittelkammern (2a bis 2d)gleichzeitig über Ventile (8a bis 8d), von denen jeweils eines einer Druckmittelkammer (2a bis 2d) zugeordnet ist, mit dem Drucksensor (22) verbunden werden, und dass Druckmittel über eine Zeitdauer von dem Druckmittelspeicher (16) in die Druckmittelkammern (2a bis 2d) überführt wird, während der die Druckdifferenz zwischen dem Druckmittelspeicher (16) und dem Mittelwert einen Schwellwert überschreitet.

7. Verfahren zum Auffüllen einer Druckmittelkammer (2a bis 2d) einer Niveauregelanlage nach einem der Ansprüche 1 bis 6, **dadurch gekennzeichnet, dass** die Druckbestimmung in der bzw. den Druckmittelkammern (2a bis 2d) unmittelbar vor einem Auffüllvorgang erfolgt.

8. Verfahren zum Auffüllen einer Druckmittelkammer (2a bis 2d) einer Niveauregelanlage nach einem der Ansprüche 1 bis 7, **dadurch gekennzeichnet, dass** während der Zeitdauer, in der Druckmittel mittels des Kompressors (14) in eine Druckmittelkammer (2a bis 2d) überführt wird, der Kompressor (14) nicht mit dem Druckmittelspeicher (16) in Wirkverbindung steht.

9. Verfahren zum Auffüllen einer Druckmittelkammer (2a bis 2d) einer Niveauregelanlage nach einem der Ansprüche 1 bis 8, **dadurch gekennzeichnet, dass** während der Zeitdauer, in der Druckmittel von dem Druckmittelspeicher (16) in eine Druckmittelkammer (2a bis 2d) überführt wird, zusätzlich Druckmittel mittels des Kompressors (14) in die Druckmittelkammer (2a bis 2d) überführt wird.

## Claims

1. Method for replenishing a pressure medium chamber (2a to 2d) of a ride level control system for vehicles by means of which the body of a vehicle is suspended with respect to a vehicle axle and which contains the following components:
- a pressure medium accumulator (16),
- at least one pressure medium chamber (2a to 2d) which at certain times is operatively connected to the pressure medium accumulator (16) in such a way that pressure medium can be transferred from the pressure medium accumulator (16) into the pressure medium chamber (2a to 2d),
- a compressor (14) which at certain times is operatively connected to the pressure medium accumulator (16) or to the pressure medium chamber (2a to 2d) in such a way that by means of the compressor (14) pressure medium can be transferred into the pressure medium accumulator (16) or into the pressure medium chamber (2a to 2d),
**characterized in that** in order to carry out a replenishing process the following method steps are carried out:
- prior to replenishing the pressure medium chamber (2a to 2d) with pressure medium, the pressure in the pressure medium accumulator (16) and the pressure in the pressure medium chamber and the pressure difference between the pressure medium accumulator (16) and the pressure medium chamber (2a to 2d) are determined;
- during the replenishing process,
- pressure medium is transferred at least from the pressure medium accumulator (16) into the pressure medium chamber (2a to 2d) over a time period during which the pressure difference between the pressure medium accumulator (16) and the pressure medium chamber (2a to 2d) exceeds a threshold value,
- pressure medium is transferred into the pressure medium chamber (2a to 2d) by means of the compressor (14) if the pressure-medium pressure difference between the pressure medium accumulator (16) and the pressure medium chamber (2a to 2d) drops below the threshold value and further replenishing of the pressure medium chamber (2a to 2d) is necessary.

2. Method for replenishing a pressure medium chamber of a ride level control system according to Claim 1, **characterized in that** the time period during which the pressure difference between the pressure medium accumulator (16) and the pressure medium chamber (2a to 2d) exceeds a threshold value is determined from a characteristic curve (26) which represents the time profile of the pressure difference.

3. Method for replenishing a pressure medium chamber (2a to 2d) of a ride level control system according to one of claims 1 to 2, **characterized in that** the pressure in the pressure medium accumulator (16) is measured directly after a change in the pressure medium accumulator (16).

4. Method for replenishing a pressure medium chamber (2a to 2d) of a ride level control system according to one of claims 1 to 3, **characterized in that** the pressure in the pressure medium accumulator (16) is measured at regular intervals.

5. Method for replenishing a pressure medium chamber of a ride level control system according to one of Claims 1 to 4, **characterized in that** the body of the vehicle is suspended with respect to at least one vehicle axle with two pressure chambers (2a to 2d), and **in that** in order to jointly replenish the pressure medium chambers (2a to 2d) the pressure in each pressure medium chamber (2a to 2d) is measured before the replenishing process and a mean value is determined from these measured values, and **in that** pressure medium is transferred from the pressure medium accumulator (16) into the pressure medium chambers (2a to 2d) over a time period during which the pressure difference between the pressure medium accumulator (16) and the mean value exceeds a threshold value.

6. Method for replenishing a pressure medium chamber of a ride level control system according to one of Claims 1 to 4, **characterized in that** the body of the vehicle is suspended with respect to at least one vehicle axle with two pressure chambers (2a to 2d), and **in that** a mean value of the pressure in the pressure medium chambers (2a to 2d) is measured by virtue of the fact that the pressure medium chambers (2a to 2d) are simultaneously connected to the pressure sensor (22) by means of valves (8a to 8d), one of which is in each case assigned to a pressure medium chamber (2a to 2d), and **in that** pressure medium is transferred from the pressure medium accumulator (16) into the pressure medium chambers (2a to 2d) over a time period during which the pressure difference between the pressure medium accumulator (16) and the mean value exceeds a threshold value.

7. Method for replenishing a pressure medium chamber (2a to 2d) of a ride level control system according to one of Claims 1 to 6, **characterized in that** the pressure in the pressure medium chamber or chambers (2a to 2d) is determined directly before a replenishing process.

8. Method for replenishing a pressure medium chamber (2a to 2d) of a ride level control system according to one of Claims 1 to 7, **characterized in that**, during the time period in which pressure medium is transferred into a pressure medium chamber (2a to 2d) by means of the compressor (14), the compressor (14) is not operatively connected to the pressure medium accumulator (16).

9. Method for replenishing a pressure medium chamber (2a to 2d) of a ride level control system according to one of Claims 1 to 8, **characterized in that** during the time period in which pressure medium is transferred from the pressure medium accumulator (16) into a pressure medium chamber (2a to 2d), pressure medium is additionally transferred into the pressure medium chamber (2a to 2d) by means of the compressor (14).

## Revendications

1. Procédé de remplissage d'une chambre (2a à 2d) à fluide sous pression d'une installation de régulation de niveau de véhicule par laquelle le châssis d'un véhicule est suspendu sur au moins un essieu du véhicule, et qui contient les composants suivants :
- un réservoir (16) à fluide sous pression,
- au moins une chambre (2a à 2d) à fluide sous pression qui coopère à certains moments avec le réservoir (16) à fluide sous pression de manière à permettre le transfert de fluide sous pression dur réservoir (16) à fluide sous pression jusque dans la chambre (2a à 2d) à fluide sous pression,
- un compresseur (14) qui coopère à certains moments avec le réservoir (16) à fluide sous pression ou la chambre (2a à 2d) à fluide sous pression de telle sorte que le fluide sous pression puisse être transféré à l'aide du compresseur (14) dans le réservoir (16) à fluide sous pression ou dans la chambre (2a à 2d) à fluide sous pression,
**caractérisé en ce que**
pour exécuter une opération de remplissage, on exécute les étapes de procédé qui consistent à :
- avant le remplissage de la chambre (2a à 2d) à fluide sous pression par du fluide sous pression, la pression dans le réservoir (16) à fluide sous pression et la pression dans la chambre à fluide sous pression sont déterminées, de même que la différence de pression entre le réservoir (16) à fluide sous pression et la chambre (2a à 2d) à fluide sous pression,
- pendant l'opération de remplissage :
- le fluide sous pression est transféré au moins du réservoir (16) à fluide sous pression jusque dans la chambre (2a à 2d) à fluide sous pression pendant l'intervalle de temps au cours duquel la différence de pression entre le réservoir (16) à fluide sous pression et la chambre (2a à 2d) à fluide sous pression dépasse une valeur de seuil,
- le fluide sous pression est transféré dans la chambre (2a à 2d) à fluide sous pression au moyen du compresseur (14) lorsque la différence de pression du fluide sous pression entre le réservoir (16) à fluide sous pression et la chambre (2a à 2d) à fluide sous pression n'atteint pas la valeur de seuil et que la poursuite du remplissage de la chambre (2a à 2d) du fluide sous pression est nécessaire.

2. Procédé de remplissage d'une chambre de fluide sous pression d'une installation de régulation de niveau selon la revendication 1, **caractérisé en ce que** l'intervalle de temps pendant lequel la différence de pression entre le réservoir (16) à fluide sous pression et la chambre (2a à 2d) à fluide sous pression dépasse une valeur de seuil est déterminé par une ligne caractéristique (26) qui reproduit l'évolution temporelle de la différence de pression.

3. Procédé de remplissage d'une chambre (2a à 2d) à fluide sous pression d'une installation de régulation du niveau selon l'une des revendications 1 à 2, **caractérisé en ce que** la pression dans le réservoir (16) à fluide sous pression est mesurée immédiatement après une modification de la pression dans le réservoir (16) à fluide sous pression.

4. Procédé de remplissage d'une chambre (2a à 2d) à fluide sous pression d'une installation de régulation du niveau selon l'une des revendications 1 à 3, **caractérisé en ce que** la pression qui règne dans le réservoir (16) à fluide sous pression est mesurée à des intervalles réguliers.

5. Procédé de remplissage d'une chambre de fluide sous pression d'une installation de régulation de niveau selon l'une des revendications 1 à 4, **caractérisé en ce que** le châssis du véhicule est suspendu sur au moins un essieu du véhicule par deux chambres sous pression (2a à 2d) et **en ce que** pour remplir conjointement les chambres (2a à 2d) à fluide sous pression, la pression dans chaque chambre (2a à 2d) à fluide sous pression est mesurée avant l'opération de remplissage et en ce une valeur moyenne est déterminée à partir de ces valeurs de mesure et **en ce que** le fluide sous pression est transféré du réservoir (16) à fluide sous pression jusque dans les chambres (2a à 2d) à fluide sous pression pendant la durée au cours de laquelle la différence de pression entre le réservoir (16) à fluide sous pression et la valeur moyenne dépasse une valeur de seuil.

6. Procédé de remplissage d'une chambre de fluide sous pression d'une installation de régulation de niveau selon l'une des revendications 1 à 4, **caractérisé en ce que** le châssis du véhicule est suspendu sur au moins un essieu du véhicule par deux chambres sous pression (2a à 2d) et **en ce qu'**une valeur moyenne de la pression dans les chambres (2a à 2d) à fluide sous pression est mesurée à l'aide du détecteur de pression (22) en reliant simultanément les chambres (2a à 2d) à fluide sous pression par des soupapes (8a à 8d) respectives associées à chacune des chambres (2a à 2d) à fluide sous pression et **en ce que** le fluide sous pression est transféré du réservoir (16) à fluide sous pression jusque dans les chambres (2a à 2d) à fluide sous pression pendant la durée au cours de laquelle la différence de pression entre le réservoir (16) à fluide sous pression et la valeur moyenne dépasse une valeur de seuil.

7. Procédé de remplissage d'une chambre (2a à 2d) à fluide sous pression d'une installation de régulation de niveau selon l'une des revendications 1 à 6, **caractérisé en ce que** la détermination de la pression dans la ou les chambres (2a à 2d) à fluide sous pression est effectuée immédiatement avant une opération de remplissage.

8. Procédé de remplissage d'une chambre (2a à 2d) à fluide sous pression d'une installation de régulation de niveau selon l'une des revendications 1 à 7, **caractérisé en ce que** le compresseur (14) ne coopère pas avec le réservoir (16) à fluide sous pression pendant la durée au cours de laquelle le fluide sous pression est transféré au moyen du compresseur (14) dans une chambre (2a à 2d) à fluide sous pression.

9. Procédé de remplissage d'une chambre (2a à 2d) à fluide sous pression d'une installation de régulation de niveau selon l'une des revendications 1 à 8, **caractérisé en ce que** pendant la durée au cours de laquelle le fluide sous pression est transféré depuis le réservoir (16) à fluide sous pression jusque dans une chambre (2a à 2d) à fluide sous pression, un supplément de fluide sous pression est transféré dans la chambre (2a à 2d) à fluide sous pression au moyen du compresseur (14).
